## Europäisches Patentamt
## European Patent Office
## Office européen des brevets

(11) Publication number: **0 089 736**
**B1**

(12) **EUROPEAN PATENT SPECIFICATION**

(45) Date of publication of patent specification: **16.07.86**

(51) Int. Cl.⁴: **G 11 B 7/08**

(21) Application number: **83300506.9**

(22) Date of filing: **01.02.83**

(54) **Information track centering system.**

(30) Priority: **19.03.82 US 359641**

(43) Date of publication of application:
**28.09.83 Bulletin 83/39**

(45) Publication of the grant of the patent:
**16.07.86 Bulletin 86/29**

(84) Designated Contracting States:
**DE FR GB NL**

(56) References cited:
**GB-A-2 016 747**
**US-A-4 118 735**

**Patent Abstracts of Japan vol. 2, no. 23, 15
February 1978 page 11753E77**

(73) Proprietor: **MAGNETIC PERIPHERALS INC.**
**8100-34th Avenue South**
**Minneapolis Minnesota 55440 (US)**

(72) Inventor: **Chen, Di**
**302 Sunbird Clifts West**
**Colorado Springs Colorado 80907 (US)**

(74) Representative: **Caro, William Egerton et al**
**J. MILLER & CO. Lincoln House 296-302 High
Holborn**
**London WC1V 7JH (GB)**

## Description

This invention relates to information track centering systems for optical recording systems and has application both to the read mode and write mode.

The present invention seeks to provide an information track centering system where radial position detection of a read/write head of an optical recording system is detected in order to keep the head properly positioned over an information track on an optical media recording disk. An optical media recording disk may be pre-formatted with clock information for use during a writing mode of information and the clock information may be sufficient to maintain the head properly positioned over the information track during a writing mode.

U.S. Patent Specification No. 4,063,287 relates to an optical recording device and shows an oscillating tracking mirror device for oscillating a radiation beam transversely with respect to the information track on an optical media recording disk. By scanning the information track transversely using the mirror device the information track may be followed using the mirror device in order to maintain proper position of the information track with respect to a reflected beam detecting system. This patent specification does not show operation in the radial direction of a read/write head using the information generated by the mirror device, but shows only the generation of a single radiation beam to be reflected from the optical, media recording disk to provide tracking information as well as the other information derived from the reflected beam.

British Specification No. A 2 016 747 shows an optical recording system which has both reading and writing abilities and in which a tracking system is provided for positioning a read/write head. In particular, the optical recording system uses an optical media recording disk which has a prewritten servo track. In one embodiment, a diffraction grating is used to generate a zero order beam together with plus one or minus one order beams which lie tangentially on the servo track ahead of and behind the zero order radiation beam, respectively. The diffraction grating is positioned so that the plus one order beam is on one side of the centre of the servo track and the minus one order beam is on the opposite side of the centre of the servo track leaving the zero order beam centered on the servo track.

Should the radial position alignment of the read/write beam change with respect to the servo track, a detector control system using the plus one and minus one order beams is used to adjust the radial position of the read/write head in order to maintain servo track centering. Because the plus one and minus one order beams are fixed with respect to the centre of the servo track and because there is a time difference between the signals detected by the plus one order beam and the minus one order beam with respect of the same location on the optical media recording disk, the responsiveness of the optical recording system is not the optimum for all tracking conditions.

According to the present invention there is provided an information track centering system comprising, beam generating means and means for generating a leading first order radiation beam and a trailing first order radiation beam with respect to a primary zero order radiation beam, detecting means for detecting radiation beams reflected from the optical media recording disk by the first order radiation beams, means for generating a difference signal with respect to output signals of the detecting means, and means for generating an error signal representative of the distance and direction the information track is off centre, is characterised by drive means for oscillating the means for generating the first order beams, so that spots produced on an optical media recording disk by the first order radiation beams are caused to wobble radially inwardly and outwardly with respect to the centre of an information track, leaving the zero order beam unaffected.

The means for generating the first order radiation beams may comprise a diffraction grating.

The diffraction grating may be mounted for pivotal oscillation by the drive means about a support.

The difference signal may be a time averaged difference signal.

The system may include a polarizing beam splitter for passing first order radiation beams and the zero order radiation beam, a quarter-wave plate for passing the first order radiation beams and the zero order radiation beams changing the direction of polarization thereof, and objective lens focusing means for focusing the first order radiation beams and the zero order radiation beam on to an optical media recording disk.

The system may also include band pass filter means for removing from the difference signal any unwanted signal outside the frequency spectrum for error detection and correction, and synchronous amplifier-detector means connected with the output of the band pass filter means for producing an error signal containing information representative of the distance and direction the information track is off centre.

In the latter case, the drive means may be driven by an oscillating signal from a grating driver which also has an output to the synchronous amplifier-detector means.

The invention is illustrated, merely by way of example, in the accompanying drawings, in which:—

Fig. 1 shows, in block diagram form, an optical recording system having an information track centering system according to the present invention;

Figs. 2A and 2B show schematically the relationship of radiation beams generated by the information track centering system of Fig. 1 with respect to information tracks on an optical media recording disk;

Figs. 3A and 3B show the relationship of radiation beams generated by the information track centering system of Fig. 1 with respect to an information track on an optical media recording disk where the position of the radiation beams is out of alignment in Fig. 3A and in alignment in Fig. 3B; and

Figs. 4A and 4B show the output signals of a detector of the information track centering system of Fig. 1 for the radiation beams shown in Fig. 3A and 3B, respectively.

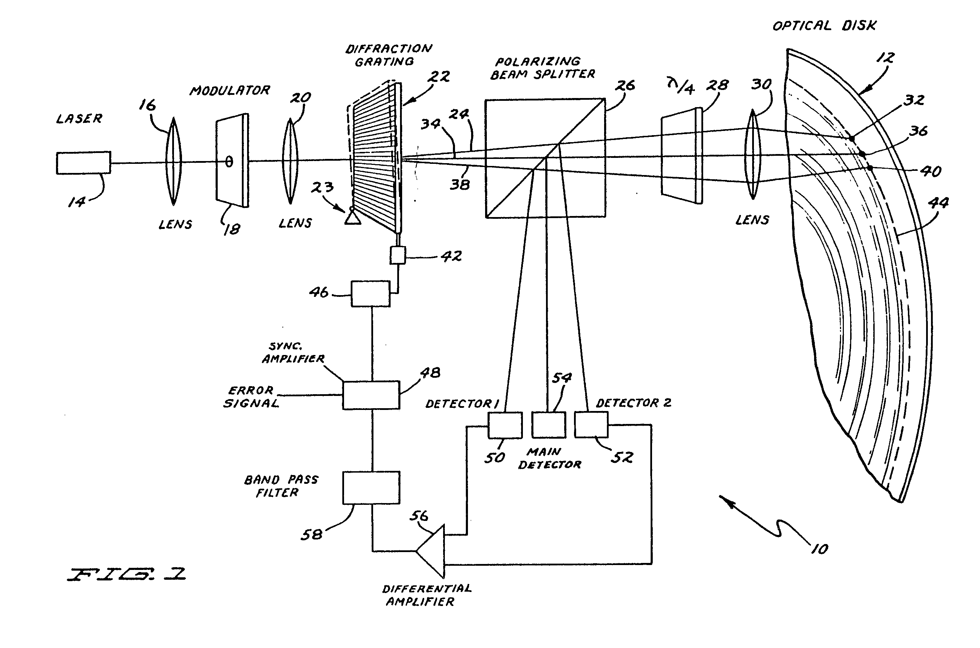

Referring to to Fig. 1, an optical recording system 10 having an information track centering system according to the present invention is shown schematically in operation for use with respect to an optical media recording disk 12. The optical recording system has a conventional laser 14 for use during both reading and writing operations. Although different optical recording systems may be used with the present invention, the optical recording system shown in Fig. 1 has a first lens 16 receiving a laser beam from the laser 14, an acoustical-optical modulator 18 and another lens 20. The modulator 18 modulates the laser beam in a known fashion during the writing operation.

A diffraction grating 22 is placed in the path of the laser beam for the purpose of generating a plus one order radiation beam 24, a minus one order radiation beam 38 and a zero order radiation beam 34 originally generated by the laser 14. The plus one order radiation beam 24 is passed through a polarizing beam splitter 26, a quarter-wave plate 28, an objective focusing lens 30 and arrives on the optical media recording disk 12 to create a light spot 32. The quarter-wave plate 28 works with the polarizing beam splitter 26 conventionally so that reflected radiation beams from the optical media recording disk 12 pass out of the polarizing beam splitter 26 in a different direction from the incoming radiation beams from the laser 14 and the diffraction grating 22. Similarly, the zero order light beam 34 passes through the polarizing beam splitter 26, the quarter-wave plate 28 and the objective focusing lens 30 to form a light spot 36 on the optical media recording disk 12. Finally, the minus one order radiation beam 38 passes through the polarizing beam splitter 26, the quarter-wave plate 28 and the objective focusing lens 30 to form a light spot 40 on the optical media recording disk 12.

The diffraction grating 22 is pivotally mounted on a support 23 and is oscillated by a mechanical device 42, such as a piezo-electric crystal so that the plus one and minus one order radiation beams 24, 38 respectively are wobbled in a radial direction on the optical media recording disk 12 about a centre line position of an information track 44. Thus, the spot 32 and the spot 40 wobble inwardly and outwardly around the centre of the information track 44 while the zero order radiation beam 34 remains unaffected by the oscillation of the diffraction grating 22. Because of the arrangement of the diffraction grating 22, the polarizing beam splitter 26, the quarter-wave plate 28 and the objective focusing lens 30, the spots 32, 40 move in the opposite direction radially with respect to one another during this wobbling motion. The mechanical device 42 receives a drive input from a grating driver 46 which generates an oscillating drive signal with a frequency of, for example, 20 to 30 KHz. The grating driver 46 also has an output containing the proper phase and frequency of the grating driver which output is connected to a synchronous amplifier-detector 48.

Upon reflection from the optical media recording disk 12, the radiation beams 24, 38 are reflected to different detectors in a detector array. Because of their different positions on the optical media recording disk 12 and the arrangement of the polarizing beam splitter 26 and the objective lens 30, this detector array allows for the minus one order beam 38 to be returned to a first detector 50 in the detector array. Similarly, the plus one order radiation beam 24 is reflected to a second detector 52 in the detector array. A main detector 54 receives the zero order radiation beam. The main detector is responsible for reading information from the optical media recording disk 12 and for providing focusing feedback for a focus system of the objective lens 30. These functions may occur in a known fashion. The detected signals produced by the detectors 50, 52 are connected as inputs to a differential amplifier 56 which forms an output difference signal representative of the difference between the detected signals.

The output of differential amplifier 56 is connected to a band pass filter 58 which passes the difference signal but attenuates any high frequency oscillation signal component with which the diffraction grating 22 is driven. The filtered difference signal is connected from the band pass filter 58 to the synchronous amplifier-detector 48. The output of the synchronous amplifier-detector 48 represents an error signal based on the difference in signals detected by the detectors 50, 52 and also corresponds to a position error signal of the spots 40, 32 in following the information track 44 on the optical media recording disk 12.

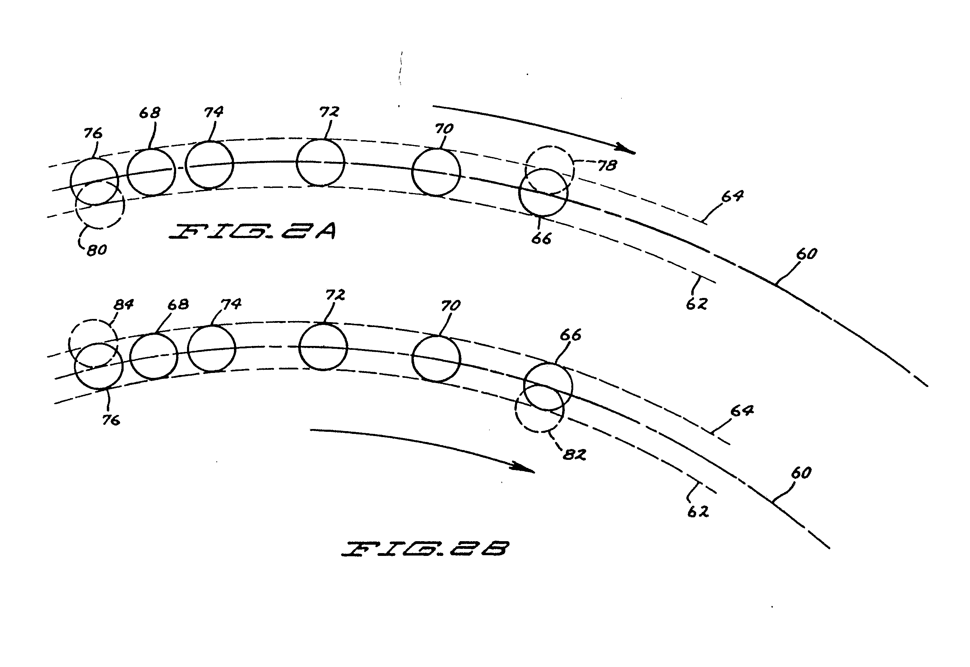

Referring now to Fig. 2A, an information track 60 is shown schematically as it would appear on an optical media recording disk. The sides or boundaries of the normal track width are shown by dotted lines at 62, 64. The information track is shown with schematically indicated information bits written at 66, 70, 74, 68, 76. In this example, the plus one order radiation beam is shown impinging at a spot 78 on the information bit 66. The zero order radiation beam impinges at a spot 72 and the minus one order radiation beam impinges at a spot 80 on the information bit 76. Fig. 2A illustrates the case where the diffraction grating 22 of Fig. 1 is one extreme position of its oscillation showing the plus one and minus one order radiation beams disposed equally and oppositely with respect to the centre line of the information track 60. Fig. 2B shows the same relationship of information bits 66, 70, 74, 68, 76 with respect to an information track 60. However, in Fig. 2B the diffraction grating 22 is at the opposite extreme position of its oscillation from that shown in Fig. 2A, the plus one order radiation beam and minus one order radiation beam, respectively impinging at spots 82, 84.

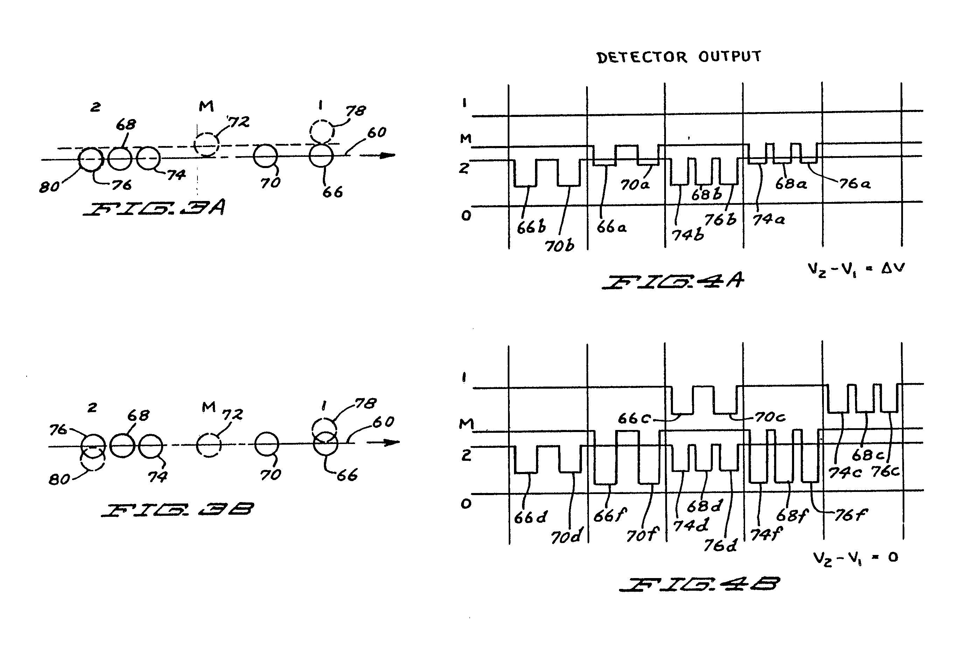

Referring now to Figs. 3A and 4A, the information track 60 is again shown with an arrow indicating the direction of motion of the optical media recording disk with respect to the radiation beams. In Fig. 3A the position of an optical read/write head (not shown) is displaced with respect to the centre line of the information track 60 so that the spot 78 formed by the plus one order radiation beam is displaced totally off the information track so that the reflected radiation beam as detected by the detector 50 would not show information bits 66, 70, 74, 68, 76. The spot 72 formed by the zero order radiation beam is off the centre line of the information track 60 and will only partially detect with a partial signal the information bits in the information track. Finally, spot 80 formed by the minus one order radiation beam is closer to the centre of the information track 60 and fully detects information bits on the information track. This is as opposed to the condition of only partially detecting information bits which would normally occur if the spot 72 is centered on the information track 60.

Referring now to Fig. 4A, the detected signal of detector 50 is shown diagrammatically with respect to time as a straight line showing that the detector does not detect any of the information bits. The main detector 54 is shown schematically producing only a partial detected signal for information bits at peaks 66a, 70a, 74a, 68a, 76a. Finally, the detector 52 detects, in this position, a full detected signal for the information bits as shown at peaks 66b, 70b, 74b, 68b, 76b. Thus, the difference signal between the detectors 50, 52 clearly shows that the information track is off centre with respect to the zero order radiation beam and shows the direction in which the track is off centre so that an error signal can be generated showing the amount and direction of movement required to restore proper track centering.

This error signal becomes available with a strong difference signal while the main detector 54 is still producing a useable detected signal. Note, however, that the detected signal of the main detector, while diminished and indicating the information track is off centre, alone does not indicate in which direction movement is required to restore proper track centering. Thus, an information track centering system based on only a single detector will show that an information track is off centre but will not produce information to show the direction of movement required to restore proper track centering.

Referring now to Fig. 3B the information bits 66, 70, 74, 68, 76 are shown as before. Fig. 3B represents a condition in which the zero order radiation beam reflected back to the main detector 54 represents an on-track and centered condition as shown by the spot 72. The spot 78 formed by the plus one order beam is shown partially reading the information bit 66 while the spot 80 formed by the minus one order beam is shown partially reading the information bit 76. Figure 4B shows the detected signals from the detectors 50, 52, 54 corresponding to the situation shown in Fig. 3B. The detector 50 produces only a partial detected signal for information bits at peaks 66c, 70c, 74c, 68c, 76c and the detector 52 produces only a partial detected signal for information bits at peaks 66d, 70d, 74d, 68d, 76d. It is noted, that because of the displacement with respect to the spots 32, 40 reflected back to detectors 50, 52 respectively, the detected signals represented in Fig. 4B are correspondingly time displaced on the time axis. The detected signal from the main detector 54 shows larger signal peaks representing a full strength reading condition where the zero order radiation beam encounters the information bits at peaks 66f, 70f, 74f, 68f, 76f.

The bit density per track and the rate of revolution of the optical media recording disk is such that numerous information bits should pass beneath the detectors 50, 52, 54 as the diffraction grating 22 oscillates. For example, it could be expected that an optical recording system using the present invention could operate at a data rate of approximately 2.5 MHz while the diffraction grating may oscillate at 20 KHz. Thus, a total of 125 information bits may pass beneath the detectors during each complete oscillation of the diffraction grating 22. The detectors 50, 52 are designed in combination with the differential amplifier 56 so that a time average signal is formed of the detected signals shown, for example, in Figs. 4A and 4B. This is because of the time displacement that occurs with the actual detection of individual information bits at the detector 50 with respect to the detector 52. This time average may have a very fast time constant, however, because of the very high data rate and the fast desired response time of the optical recording system to a position error with respect to the centre of the information track. Thus, the output signal from the differential amplifier 56 will be a time averaged signal to eliminate individual peaks representative of individual information bits on the information track.

The band pass filter 58 removes any unwanted signal outside the frequency spectrum for error detection and correction.

The synchronous amplifier-detector 48 in conjunction with the band pass filter 58 acts to amplify the error signal and to switch the sense of the error signal in synchronization with the switching of the plus one order and minus one order radiation beams from one side to the other side of the centre of the information track. That is, the error signal must contain both amplitude information representative of the degree to which the information track is off centre and the direction required to restore proper track centering. However, because the plus one and minus one order radiation beams move constantly from one side of the track to the other, the detectors also must be switched constantly in order to preserve the proper sense of the detected signals.

## Claims

1. An information track centering system comprising a beam generating means (14), and means (22) for generating a leading first order radiation beam (24) and a trailing first order radiation beam (38) with respect to a primary zero order radiation beam (34), detecting means (50, 52) for detecting radiation beams reflected from the optical media recording disk by the first order radiation beams, means (56) for generating a difference signal with respect to output signals of the detecting means, and means (48) for generating an error signal representative of the distance and direction the information track is off centre, characterised by drive means (42) for oscillating the means (22) for generating the first order beams, so that spots (32, 40) produced on an optical media recording disk (12) by the first order radiation beams are caused to wobble radially inwardly and outwardly with respect to the centre of an information track leaving the zero order beam unaffected.

2. A system according to claim 1, in which the means for generating the first order beams comprises a diffraction grating (22).

3. A system according to claim 2, in which the diffraction grating (22) is mounted for pivotal oscillation by the drive means (42) about a support (23).

4. A system according to any preceding claim, in which the difference signal is a time average difference signal.

5. A system according to any preceding claim including a polarizing beam splitter (26) for passing the first order radiation beams and the zero order radiation beam, a quarter-wave plate (28) for passing the first order radiation beams and the zero radiation beams changing the direction of polarization thereof, and objective lens focusing means (30) for focusing the first order radiation beams and the zero order radiation beam onto an optical media recording disk (12).

6. A system according to any preceding claim, including band pass filter means (58) for removing from the difference signal any unwanted signal outside the frequency spectrum for error detection and correction, and further including synchronous amplifier-detector means forming said means for generating said error signal, connected with the output of the band pass filter means for producing an error signal containing information representative of the distance and direction the information track is off centre.

7. A system according to claim 6, in which the drive means (42) is driven by an oscillating signal from a grating driver (46), which also has an output to the synchronous amplifier-detector means (48).

## Patentansprüche

1. Informationsspur-Zentriersystem mit Strahlerzeugungseinrichtungen (14) und Einrichtungen (22) zur Erzeugung eines voreilenden Strahls (24) erster Ordnung und eines nacheilenden Strahls (38) erster Ordnung bezüglich eines primären Strahls (34) nullter Ordnung, mit Detektoreinrichtungen (50, 52) zur Erfassung von Strahlen, die von der optischen Aufzeichnungsmedium-Platte von den Strahlen erster Ordnung reflektiert werden, mit Einrichtungen (56) zur Erzeugung eines Differenzsignals bezüglich der Ausgangssignale der Detektoreinrichtungen, und mit Einrichtungen (48) zur Erzeugung eines Fehlersignals, das die Entfernung und Richtung darstellt, um die die Informationsspur außermittig ist, gekennzeichnet durch Antriebseinrichtungen (42), die die Einrichtungen (22) zur Erzeugung der Strahlen erster Ordnung derart in Schwingung versetzen, daß die durch die Strahlen erster Ordnung auf der optischen Aufzeichnungsmedium-Platte (12) erzeugten Lichtflecke (32, 40) in Radialrichtung nach innen und nach außen bezüglich des Mittelpunktes einer Informationsspur gewobbelt werden, während der Strahl nullter Ordnung unbeeinflußt bleibt.

2. System nach Anspruch 1, dadurch gekennzeichnet, daß die Einrichtungen zur Erzeugung der Strahlen erster Ordnung ein Beugungsgitter (22) umfassen.

3. System nach Anspruch 2, dadurch gekennzeichnet, daß das Beugungsgitter (22) für eine Schwenkschwingung durch die Antriebseinrichtungen (42) um eine Halterung (23) herum befestigt ist.

4. System nach einem der vorhergehenden Ansprüche, dadurch gekennzeichnet, daß das Differenzsignal ein zeitlich gemitteltes Differenzsignal ist.

5. System nach einem der vorhergehenden Ansprüche, gekennzeichnet durch einen polarisierenden Strahlteiler (26) zur Weiterleitung der Strahlen erster Ordnung und des Strahls nullter Ordnung, eine Viertelwellen-Platte (28) zum Weiterleiten der Strahlen erster Ordnung und des Strahls nullter Ordnung, wobei deren Polarisationsrichtung geändert wird, und eine Objektivlinsen-Fokussiereinrichtung (30) zur Fokussierung der Strahlen erster Ordnung und des Strahls nullter Ordnung auf eine optische Aufzeichnungsmedium-Platte (12).

6. System nach einem der vorhergehenden Ansprüche, gekennzeichnet durch Bandpaß-Filtereinrichtungen (58) zur Entfernung irgendeines unerwünschten Signals außerhalb des Frequenzspektrums zur Fehlererkennung und Korrektur aus dem Differenzsignal, und synchrone Verstärker-Detektoreinrichtungen, die die Einrichtungen zur Erzeugung des Fehlersignals bilden und mit dem Ausgang der Bandpaß-Filtereinrichtungen verbunden sind, um ein Fehlersignal zu erzeugen, das eine Information enthält, die die Entfernung und Richtung darstellt, um die die Informationsspur außermittig ist.

7. System nach Anspruch 6, dadurch gekennzeichnet, daß die Antriebseinrichtungen (42) durch ein Oszillatorsignal von einem Beugungsgitter-Treiber (46) angesteuert werden, der weiterhin ein Ausgangssignal an die synchronen Verstärker-Detektoreinrichtungen (48) liefert.

## Revendications

1. Système de centrage sur une piste d'information comportant un dispositif générateur de faisceaux (14) et un dispositif (22) qui produit un faisceau de rayonnement (24) de premier ordre en avant et un faisceau de rayonnement (38) de premier ordre en arrière par rapport à un faisceau de rayonnement (34) principal d'ordre zéro, un dispositif de détection (50, 52) destiné à détecter des faisceaux de rayonnement réfléchis par le disque d'enregistrement à support optique à partir des faisceaux de rayonnement de premier ordre, un dispositif (56) qui produit un signal de différence par rapport à des signaux de sortie du dispositif de détection, et un dispositif (48) qui produit un signal d'erreur représentant la distance et la direction dont la piste d'information est décentrée, caractérisé par un dispositif d'entraînement (42) destiné à faire osciller le dispositif (22) qui produit les faisceaux de premier ordre de manière que des points lumineux (32, 40) produits sur un disque d'enregistrement (12) à support optique par les faisceaux de rayonnement de premier ordre oscillent radialement vers l'intérieur et l'extérieur par rapport au centre de la piste d'information, en laissant le faisceau d'ordre zéro non affecté.

2. Système selon la revendication 1, dans lequel le dispositif qui produit les faisceaux de premier ordre consiste en un réseau à diffraction (22).

3. Système selon la revendication 2, dans lequel le réseau à diffraction (22) est monté pour une oscillation angulaire par le dispositif d'entraînement (42) autour d'un support (23).

4. Système selon l'une quelconque des revendications précédentes, dans lequel le signal de différence est un signal de différence dont la moyenne est faite dans le temps.

5. Système selon l'une quelconque des revendications précédentes, comportant un séparateur de faisceau polarisant (26) pour laisser passer les faisceaux de rayonnement de premier ordre et le faisceau de rayonnement d'ordre zéro, une plaque en quart d'onde (28) pour laisser passer les faisceaux de rayonnement de premier ordre et le faisceaux de rayonnement d'ordre zéro changeant la direction de sa polarisation et un dispositif de focalisation à lentille d'objectif (30) destiné à focaliser les faisceaux de rayonnement de premier ordre et le faisceau de rayonnement d'ordre zéro sur un disque d'enregistrement (12) à support optique.

6. Système selon l'une quelconque des revendications précédentes, comportant un filtre passe-bande (58) destiné à éliminer, du signal de différence, tout signal indésirable extérieur au spectre de fréquence pour la détection et la correction d'erruers, et comportant en outre un dispositif amplificateur-détecteur synchrone formant ledit dispositif qui produit ledit signal d'erreur, connecté à la sortie du filtre passe-bande pour produire un signal d'erreur contenant des informations représentant la distance et la direction dont la piste d'information est décentrée.

7. Système selon la revendication 6, dans lequel le dispositif d'entraînement (42), est commandé par un signal oscillatoire provenant d'un circuit d'attaque de réseau (46), comportant également une sortie vers le dispositif amplificateur-détecteur synchrone (48).

OPTICAL DISK

DIFFRACTION GRATING

POLARIZING BEAM SPLITTER

MODULATOR

LASER

LENS

LENS

SYNC. AMPLIFIER

ERROR SIGNAL

DETECTOR 1

DETECTOR 2

MAIN DETECTOR

BAND PASS FILTER

DIFFERENTIAL AMPLIFIER

FIG. 2

0 089 736

FIG.2A

FIG.2B

2  68  M  72  1  78  60
80  76  74  70  66

*FIG.3A*

1
M
2
0

66b  70b  66a  70a  68b  74b  76b  74a  68a  76a

*FIG.4A*  $V_2 - V_1 = \Delta V$

2  68  M 72  1  78  60
76  80  74  70  66

*FIG.3B*

1
M
2
0

66c  70c
66d  66f  68d  70f  74d  76d  68f  74f  76f  70d  68c  74c 76c

*FIG.4B*  $V_2 - V_1 = 0$

0 089 736